# EUROPÄISCHE PATENTSCHRIFT

(11) **EP 2 819 893 B1**
(45) Veröffentlichungstag und Bekanntmachung des Hinweises auf die Patenterteilung: **24.05.2017**
(21) Anmeldenummer: 13708657.5
(22) Anmeldetag: 08.02.2013
(51) Int. Cl.: B60R 22/48, B60R 21/015

(54) **STAUB- UND WASSERGESCHÜTZTER SCHALTER**
DUST AND WATERPROOF SWITCH
INTERRUPTEUR PROTÉGÉ CONTRE LA POUSSIÈRE ET L'EAU

(30) Priorität: 27.02.2012 DE 202012001867 U
(43) Veröffentlichungstag der Anmeldung: 07.01.2015
(73) Patentinhaber: EAO Automotive GmbH & Co KG, 08209 Auerbach (DE)
(72) Erfinder: EBERT, Bernd, 08228 Rodewisch (DE)
(74) Vertreter: Helge, Reiner
(86) Internationale Anmeldenummer: PCT/DE2013/000070
(87) Internationale Veröffentlichungsnummer: WO 2013/127377

(56) Entgegenhaltungen:
- DE-U1- 20 204 318
- DE-U1-202007 008 624

## Beschreibung

Die vorliegende Erfindung betrifft einen staub- und wassergeschützten Schalter, der insbesondere in einem Gurtschloß von Rückhaltesystemen in Kraftfahrzeugen zur Anwendung kommt und die ordnungsgemäße Verriegelung der in das Gurtschloß eingesteckten Zunge des Sicherheitsgurtes anzeigt.

Aus den gattungsbildenden DE 20 2007 008 624 U1 und DE 202 04 318 U1 sind bereits Schalter für Gurtschlösser von Rückhaltesystemen in Kraftfahrzeugen bekannt.

Die DE 20 2007 008 624 U1 beschreibt einen Schalter für ein Gurtschloss von Rückhaltesystemen in Kraftfahrzeugen zur Anzeige, dass die Gurtzunge in das Gurtschloss eingesteckt und ordnungsgemäß verriegelt ist, bei dem die kontaktgebenden Bereiche der Kontaktbleche in einem vor Fremdstoffen geschützten oberen Gehäuseinnenraum des Schaltergehäuses vorgesehen sind, wobei ein Kontaktblech als Kontaktfeder mit einem trapez- oder bogenartigen Betätigungsbereich ausgebildet ist und dieser Betätiger der Kontaktfeder in einem seitlich vom Gehäuseinnenraum angeordneten Kanal hineinragt und die Kontakte durch Bewegen eines Schiebers im Kanal schaltbar sind.

Die DE 202 04 318 U1 beschreibt einen weiteren Schalter für ein Gurtschloss von Rückhaltesystemen von Kraftfahrzeugen zur Anzeige, dass die Gurtzunge in das Gurtschloss eingesteckt und ordnungsgemäß verriegelt ist, mit zwei Kontaktblechen, wobei ein Kontaktblech nach seinem kontaktgebenden Ende hin als Doppelkontaktzunge ausgebildet ist, wobei die kontaktgebenden Bereiche der Kontaktbleche in einem vor Fremdstoffen geschützten oberen Gehäuseraum angeordnet sind und der Kontakt durch Bewegen eines Schiebers in einem seitlich des Gehäuseinnenraumes angeordneten Kanal schaltbar ist.

Bekannt ist aus der DE 43 38 485 A1 ein für die fail-safe-Abfrage eingerichteter Sicherheitsgurtverschluß mit Mikroschalter, wobei der Mikroschalter mit zwei am Verriegelungsvorgang des Verschlusses unabhängig voneinander beteiligten Funktionsteilen derart gekoppelt ist, daß der Mikroschalter nur bei den beiden gleichzeitig in der Verriegelungsposition stehenden Funktionsstellen des Verschlusses seine geschlossene und für die Auslösung weiterer Funktionselemente der Sicherheitseinrichtung eingerichtete Stellung einnimmt.

Weiterhin ist von der Firma Eduard Hartmann GmbH ein Schalter bekannt, der in Gurtschlössern eingesetzt wird. Bei diesem Schalter handelt es sich um einen Doppelkontaktschalter, dessen Kontaktfedern bzw. -zungen im unbelasteten Zustand an den Berührungspunkten gegenseitig anliegen und den Kontakt herstellen. Eine der beiden Zungen ist dabei als Doppelkontaktzunge ausgebildet, um die Schaltsicherheit zu erhöhen. Der Schalter ist so ausgebildet, daß er seitlich im Gurtschloßgehäuse angeordnet ist und zwar derart, daß beim Einstecken der Gurtzunge ein Schieber aus einem Isolationsmaterial zwischen die Kontaktzungen geschoben wird. Dieser Schieber verbleibt nach dem Einrasten der Gurtzunge zwischen den Kontaktzungen des Schalters und trennt damit den Kontakt. Somit wird angezeigt, daß der Sicherheitsgurt angelegt und ordnungsgemäß im Schloß verriegelt ist.

Da der Schalter ein oben offenes Gehäuse aufweist, um ein Bewegen des Schiebers aus einem Isolationsmaterial zwischen die Kontaktzungen zu ermöglichen, können von außen durch die Öffnung des Gurtschloßgehäuses Fremdstoffe, wie zum Beispiel Flüssigkeiten oder feste Teilchen, eindringen.

Dies kann dazu führen, daß die Sicherheitsfunktion beeinträchtigt wird, da eine Kontaktunterbrechung fälschlicherweise eine ordnungsgemäße Verriegelung der Gurtzunge im Schloß signalisiert.

Die Kontaktzungen sind im oberen Bereich nach außen gebogen ausgeführt, um ein Einführen des Schiebers zwischen die Kontaktzonen zu erleichtern. Dadurch ergibt sich im oberen Bereich eine annähernde V-Form. Eindringende Fremdstoffe lagern sich in diesem Bereich ab und werden durch den Schieber dann direkt in den Kontaktbereich gebracht.

Desweiteren ist bei diesem Schalter eine automatisierte Montage bei der Herstellung nicht möglich, da die Kontaktzungen mit entsprechenden Kabeln verbunden werden müssen, bevor sie in das Schaltergehäuse eingesetzt werden und die Schaltzungen derart ausgebildet sind, daß sie nach dem Einbau unter einer bestimmten Vorspannung stehen. Mit den angebundenen Kabeln müssen die Kontaktzungen weitgehend von Hand in das Schaltergehäuse eingesetzt werden.

Die US-A-6002325 offenbart eine Signaleinheit für den Anschnallzustand von Sicherheitsgurten. Sie besteht aus einer Leiterplatte, die mit elektronischen Bauteilen und federnden Kontaktblechen für einen Schalter bestückt ist. Die Leiterplatte ist in einem Gehäuse montiert, das auf einer Außenfläche des Gurtschlosses befestigt ist. In dem Gehäuse ist ein Schwenkhebel (Flipperelement) auf einem Zapfen gelagert, der beim Einstecken der Gurtzunge in das Gurtschloß mittels Abgleiten einer Kante der Gurtzunge auf einer Gleitfläche des Schwenkhebels entgegen der Wirkung einer Drehfeder in den Kontaktraum der Signaleinheit gedreht wird und die Kontakte schaltet.

Da die Einsteck-Längsbewegung der Gurtzunge nicht direkt für das Schalten der Kontakte genutzt werden kann, sondern über den Schwenkhebel in eine in etwa hierzu senkrechte Richtung umgewandelt werden muß, ergibt sich die Gefahr einer starken Abnutzung der Gleitfläche am Schwenkhebel durch möglichen Grat an der Gleitkante der Gurtzunge im Verlauf der Lebensdauer, was die Schaltfunktion beeinträchtigen kann.

Da der Schwenkhebel seitlich aus dem Schaltergehäuse herausragt, kann dieser durch äußere Einwirkungen (Abbrechen) zerstört werden, so daß eine ordnungsgemäße Anzeige für den Anschnallzustand nicht mehr gewährleistet ist.

Die Kontaktzonen der Kontaktbleche sind zwar durch das Gehäuse vor einfallenden Schmutzteilchen geschützt, jedoch können von oben eintropfende Flüssigkeiten durch die für den Schwenkhebel im Gehäuse vorhandene Öffnung vorzugsweise über den Schwenkhebel in die Kontaktzonen eingeleitet werden, die zu Kontaktfehlern führen können.

Eine Ermüdung der Drehfeder im Verlauf der Lebensdauer und Ansammlung von Staub und Flüssigkeiten an der Lagerstelle des Schwenkhebels und dessen daraus resultierende Schwergängigkeit können ebenfalls ein zuverlässiges Schalten der Kontakte behindern.

Durch den erforderlichen Einsatz des Schwenkhebels und der Drehfeder verteuert sich der Schalter.

Durch die Montage der Signaleinheit auf eine Außenfläche des Gurtschlosses wird der Platzbedarf für das Gurtschloß vergrößert. Der Festsitz der Signaleinheit am Gurtschloß kann durch Klima-, Temperatur- und äußere mechanische Beanspruchungen beeinträchtigt werden. Außerdem besteht die Gefahr der Beschädigung des relativ leicht von außen zugänglichen Schwenkhebels infolge unsachgemäßen Umgangs durch die Bedienungsperson. Aufgrund der relativ komplizierten Form der Schaltkontakte ist deren automatische Bestückung auf der Leiterplatte sehr schwierig. Außerdem wird durch die Integration der Schaltkontakte in die Signaleinheit die Produktionsstückzahl eines gleichen Typs begrenzt, da die Spezifikation der Signaleinheit automobilabhängig ist und hierdurch ebenfalls eine automatisierte Produktion erschwert wird.

Die US-A-4163128 beschreibt ein Sicherheits-Gurtschloß mit einem Schalter, der aus zwei federnden Kontaktblechen besteht, deren Enden sich bei nicht eingesteckter Gurtzunge berühren. Das Schalten erfolgt durch zwei Kurvenbahnen, die sich an einem auf einem Zapfen des Gurtschloßgehäuses gelagerten Drehbetätiger befinden. Der Drehbetätiger wird durch die Gurtzunge bei deren Einstecken in das Gurtschloß entgegen der Wirkung einer Drehfeder so gedreht, daß die Kurvenbahnen die Enden der Kontaktbleche nacheinander auslenken und dadurch den Kontakt öffnen. Die Drehung erfolgt über einen am Drehbetätiger senkrecht hoch stehenden Zapfen, der mit der Gurtzunge in Eingriff kommt. Das Rückschalten erfolgt durch selbsttätige Rückstellung des Drehbetätigers infolge der Wirkung der Drehfeder und Rückfederung der Kontaktbleche nach Ziehen der Gurtzunge. Die Kontaktbleche sind in das Gurtschloß integriert, aber nicht in einem eigenständigen Schaltergehäuse.

Für das Schalten der Kontakte kann auch hier die Einsteck-Längsbewegung der Gurtzunge nicht direkt genutzt werden. Es ist ein zusätzliches Umlenkteil in Form eines Drehbetätigers mit einer Drehfeder erforderlich. Dadurch verteuert sich der Schalter.

Die Kontakte und der Drehbetätiger sind nicht gegen einfallende Schmutzteilchen und eintropfende Flüssigkeiten geschützt. Dies kann zu Funktionsstörungen durch Kontaktverschmutzung und Einschränkung der Beweglichkeit des Drehbetätigers infolge Schmutzansammlung an der Zapfenlagerung führen. Auch durch Ermüdung oder Bruch der Drehfeder im Verlauf der Lebensdauer können Funktionsstörungen auftreten.

Eine automatisierte Montage der Kontaktbleche in das Gehäuse ist nicht praktikabel, da eine Möglichkeit zum Anschluß der Leitungen an die Kontaktbleche nach deren Einsetzen in das Gehäuse nicht vorgesehen ist und deshalb die Kontaktbleche vor dem Einsetzen mit den Anschlußleitungen verbunden werden müssen.

Bekannt ist aus EP 1 485 276 B1 ein Schalter für ein Gurtschloß mit zwei Kontaktblechen, wobei ein erstes Kontaktblech nach seinem kontaktgebenden Ende hin als Doppelkontaktzunge und ein zweites Kontaktblech als Kontaktfeder mit einem hammerförmigen Bereich am kontaktgebenden Ende ausgebildet ist. Die kontaktgebenden Bereiche beider Kontaktbleche liegen in einem weitgehend vor Fremdstoffen geschützten oberen Gehäuseinnenraum des Schaltergehäuses. Unterhalb dieses Raumes enthält die Kontaktfeder einen bogenförmigen Bereich, der durch eine entsprechende Öffnung im Schaltergehäuse in einen seitlich vom Gehäuseinnenraum angeordneten Kanal, der Teil des Schalters ist, hinein ragt. In diesen Kanal wird beim Einstecken der Gurtzunge in das Gurtschloß ein zum Gurtschloß gehöriger Schieber hinein bewegt und trifft auf den in den Kanal ragenden bogenförmigen Bereich der Kontaktfeder. Dabei wird die Kontaktfeder entgegen ihrer Spannkraft in Richtung Gehäuseinnenraum ausgelenkt und der elektrische Schaltvorgang am kontaktgebenden Ende der Kontaktfeder zusammen mit der Doppelkontaktzunge des ersten Kontaktbleches bewirkt. Der Schalter kann als Öffner oder Schließer ausgeführt sein.

Infolge der für die Herausführung des bogenförmigen Bereiches der Kontaktfeder aus dem Gehäuseinnenraum erforderlichen Öffnung im Schaltergehäuse ist ein Staubschutz für den Gehäuseinnenraum und damit für die darin befindlichen kontaktgebenden Bereiche der beiden Kontaktbleche nicht zu erreichen.

Desweiteren kann auf Grund der erforderlichen Richtungsumleitung der durch den Schieber auf den bogenförmigen Bereich der Kontaktfeder wirkenden Längskraft in eine für die Auslenkung der Kontaktfeder erforderliche Querkraft eine Deformierung des bogenförmigen Bereiches der Kontaktfeder durch Reibungskräfte beim Auftreffen des Schiebers auf diesen Bereich bei gleichzeitigem Vorliegen von toleranzbedingten Maximalwerten für die Dicke des Schiebers und das Maß für das Hineinragen des bogenförmigen Bereiches der Kontaktfeder in den seitlich vom Gehäuseinnenraum angeordneten Kanal nicht ausgeschlossen werden, wenn zusätzlich die Reibwirkung durch von außen in das Gurtschloss eingedrungene Fremdkörper erhöht wird. Als Folge davon kann im Extremfall die Schalterfunktion gestört sein.

Der Erfindung, die durch die Ansprüche gekennzeichnet ist, liegt daher die Aufgabe zugrunde, einen Staub- und wassergeschützten Schalter, der insbesondere in einem Gurtschloß von Rückhaltesystemen in Kraftfahrzeugen zur Anwendung kommt und die ordnungsgemäße Verriegelung der in das Gurtschloß eingesteckten Zunge des Sicherheitsgurtes anzeigt, derart auszubilden, daß der Kontaktbereich weitgehend vor eindringenden Fremdstoffen geschützt ist und dieser für eine vollautomatisierte Montage bei der Herstellung des Schalters mit anschließender weitgehender automatisierter Anbindung des Kabels geeignet ist. Erfindungsgemäß wird die Aufgabe dadurch gelöst, daß der staub- und wassergeschützte Schalter, insbesondere für ein Gurtschloß von Rückhaltesystemen von Kraftfahrzeugen zur Anzeige, daß die Gurtzunge in das Gurtschloß eingesteckt und ordnungsgemäß verriegelt ist, mit zwei Kontaktblechen versehen ist, wobei die kontaktgebenden Bereiche der Kontaktbleche in einem vor Fremdstoffen geschützten Gehäuseinnenraum des Schaltergehäuses angeordnet sind und der Kontakt durch Bewegen eines Schiebers in einem seitlich des Gehäuseinnenraumes angeordneten Kanal schaltbar ist. Die Kontaktbleche, bestehend aus einem Festkontaktblech und einem Kontaktfederblech, sind mittels eines Betätigungsbügels schaltbar, wobei der Betätigungsbügel mit seiner Abwinkelung die dem Kanal zugewandte Seitenwand des Gehäuseinnenraumes durchdringt und mit seinem anderen Ende im Schaltergehäuse schwenkbar gelagert ist. Die Aussparung für die Schwenklagerung des Betätigungsbügels ist räumlich getrennt vom Gehäuseinnenraum angeordnet.

Der Betätigungsbügel, bestehend aus einem ebenen rechteckigen Blechstreifen mit einem angeformten halbkreisförmigen Bereich an dem einen Ende und einer in gleicher Richtung vorhandenen zweifachen Abbiegung an dem anderen Ende überträgt die zum Schalten erforderliche Kraft auf die Kontaktfeder, wobei der halbkreisförmige Bereich zusammen mit einer passenden Aussparung im Schaltergehäuse eine Schwenklagerung für den Betätigungsbügel bildet und das andere Ende des Betätigungsbügels mit Hilfe der ersten Abbiegung durch einen Spalt in der dem Kanal zugewandten Seitenwand des Gehäuseinnenraumes in diesen geführt und infolge der zweiten Abbiegung die Schwenkbewegung des Betätigungsbügels in Richtung des Kanals begrenzt. Infolge der Bewegung des Schiebers in den Kanal wird über das in den Gehäuseinnenraum ragende Ende des Betätigungsbügels das Kontaktfederblech ausgelenkt und dadurch das Schalten der Kontakte herbeigeführt. Der Betätigungsbügel kann auch aus einem Federdraht bestehen.

Die Abwinkelung des Betätigungsbügels ist durch einen Spalt geführt, wodurch der Eintritt von Staub oder Wasser sicher minimiert werden kann.

Durch Anbringen einer Membran aus einem biegeweichen Kunststoffmaterial im Bereich der Abwinkelung des Betätigungsbügels kann eine absolute Staubund Wasserdichtheit des Schalters erreicht werden, wobei die Membran den Spalt zur Durchführung der Abwinkelung des Betätigungsbügels verschließt.

Die Lagesicherung des Betätigungsbügels gegen dessen Herauslösen aus dem Schaltergehäuse und die Abdichtung des Gehäuseinnenraumes gegen Eindringen von Fremdstoffen in diesen erfolgt durch einen auf die Oberseite des Schaltergehäuses montierten Gehäusedeckel.

Die Auslenkung des Kontaktfederbleches erfolgt im Gehäuseinnenraum durch den Betätigungsbügel quer zu seiner Längsrichtung, wodurch eine Deformierung verhindert wird.

Das Kontaktfederblech kann als im wesentlichen flaches Biegeteil gestaltet sein, was sich vorteilhaft auf die automatisierte Montage bei der Herstellung des Schalters auswirkt.

Auf Grund der für die Schaltfunktion weitgehend frei wählbaren Länge des Betätigungsbügels kann dessen Auflaufschräge für den Schieber relativ flach gestaltet werden, so dass die für die Betätigung des Schalters durch den Schieber aufzubringende Schubkraft gering gehalten werden kann. Zusätzlich kann zu diesem Zweck für den Betätigungsbügel ein Material bzw. eine Oberflächenschicht mit guter Gleitfähigkeit unabhängig von der für die elektrische Funktion des Kontaktfederbleches erforderlichen Oberflächenschicht gewählt werden.

Anhand eines Ausführungsbeispieles soll die Erfindung näher erläutert werden.

Es zeigen
- Figur 1: - Schalter in unbetätigten Zustand
- Figur 2: - Schalter im betätigten Zustand
- Figur 3: - Ausbildung der Kontakte/Betätigungsbügel

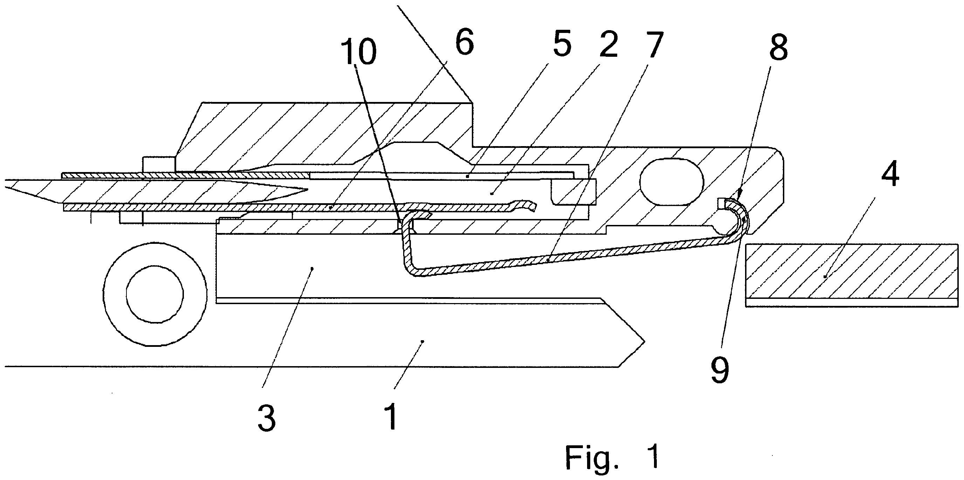

Die Figur 1 zeigt einen Schnitt durch den erfindungsgemäßen Schalter im unbetätigten Zustand.

Der Schalter, der als Schließer ausgelegt ist, besteht aus dem Schaltgehäuse 1, das mittels eines hier nicht dargestellten Deckels verschlossen wird. Der Schalter weist einen geschlossenen Gehäuseinnenraum 2 auf, der das Festkontaktblech 5 und das Kontaktfederblech 6 aufnimmt und nur über einen Spalt 10 zum Kanal 3 hin offen ist. Im unteren Bereich des Schalters ist ein Anschlußraum vorgesehen, in dem Festkontaktblech 5 und Kontaktfederblech 6 enden. Diese können hier mit den Anschlußleitungen verbunden werden.

Der Betätigungsbügel 7 ist einerseits mittels einem halbkreisförmigen Bereich 9 in einer Aussparung 8 schwenkbar gelagert. Andererseits durchdringt die Abwinkelung 13 den Spalt 10 und liegt mit seinem bogenförmigen Endbereich 14 auf dem Kontaktfederblech 6. Der bogenförmige Endbereich 14 verhindert ein Herausrutschen der Abwinkelung 13 aus dem Spalt 10.

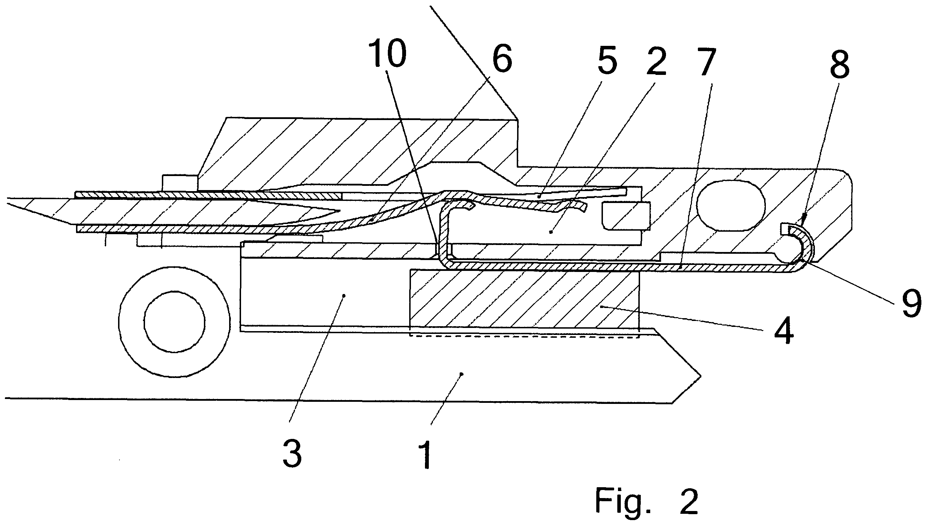

Durch Abwärtsbewegung des Schiebers 4 im Kanal 3 infolge des Einsteckens der Gurtzunge in das Gurtschloß wird der Betätigungsbügel 7 in Richtung der kontaktraumseitigen Kanalwand gedrückt. Dabei drückt der bogenförmige Endbereich 14 auf das Kontaktfederblech 6 und schließt somit den Kontakt. Die Figur 2 zeigt den Schalter im betätigten Zustand.

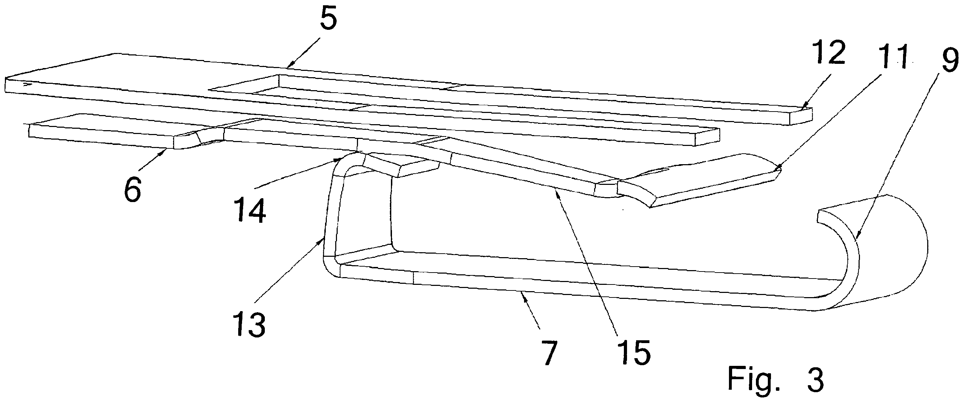

Die Figur 3 zeigt eine Explosivdarstellung der Kontakte und des Betätigungsbügels 7.

Das Festkontaktblech 5 ist mit den Kontaktzungen 12 versehen, während das Kontaktfederblech mit einem schmalen Stegbereich 15 und einem am Ende angeordneten hammerförmigen Bereich 11 versehen ist. Der hammerförmig ausgebildete Bereich 11 des Kontaktfederbleches 6 bildet beidseitig die Anlagefläche an den Kontaktzungen 12 des Festkontaktbleches 5 und damit die beiden Kontaktstellen des Schalters. Das Kontaktfederblech 6 steht sowohl im kontaktierten Zustand als auch im nicht kontaktierten Zustand unter einer Biegespannung. Im nicht betätigten Zustand erfolgt durch die Biegespannung ein Zurückdrücken der Abwinkelung des Betätigungsbügel 7 in den Kanal 3.

Der so ausgebildete Schalter kann vollautomatisch montiert werden. Mittels entsprechender Bestückungsautomaten können Festkontaktblech 5, Kontaktfederblech 6 und der Betätigungsbügel 7 eingesetzt werden. Nach dem Verschließen des Schaltergehäuses 1 mittels eines Deckels kann der Schalter auf seine Funktion geprüft werden. Anschließend können dann die Anschlußleitungen angebracht werden. Dies erfolgt weitgehend automatisiert durch Crimpen oder Verschweißen, da das Gehäuse 1 im Bereich des Anschlußraumes beidseitig offen ist.

Der Gehäuseinnenraum 2 ist bis auf den Spalt 10, der von der Abwinkelung 13 des Betätigungsbügels 7 durchdrungen wird, geschlossen ausgebildet, so daß Fremdkörper, wie Staub und Wasser nicht in den Kontaktbereich eindringen können. Somit ist ein Schutz vor Funktionsausfällen durch Verschmutzung gewährleistet.

### Bezugszeichenaufstellung

- 1: - Schaltergehäuse
- 2: - Gehäuseinnenraum
- 3: - Kanal
- 4: - Schieber
- 5: - Festkontaktblech
- 6: - Kontaktfederblech
- 7: - Betätigungsbügel
- 8: - Aussparung
- 9: - halbkreisförmiger Bereich
- 10: - Schlitz
- 11: - hammerförmiger Bereich
- 12: - Kontaktzungen
- 13: - Abwinkelung
- 14: - Endbereich
- 15: - Stegbereich

## Patentansprüche

1. Staub- und wassergeschützter Schalter, insbesondere für ein Gurtschloß von Rückhaltesystemen von Kraftfahrzeugen zur Anzeige, daß die Gurtzunge in das Gurtschloß eingesteckt und ordnungsgemäß verriegelt ist, mit zwei Kontaktblechen (5,6), dessen die kontaktgebenden Bereiche in einem vor Fremdstoffen geschützten Gehäuseinnenraum (2) des Schaltergehäuses (1) angeordnet sind und der Kontakt durch Bewegen eines Schiebers (4) in einem seitlich des Gehäuseinnenraumes (2) angeordneten Kanal (3) schaltbar ist, wobei die Kontaktbleche, bestehend aus einem Festkontaktblech (5) und einem Kontaktfederblech (6), mittels eines Betätigungsbügels (7) schaltbar sind, und der Betätigungsbügel (7) mit seiner Abwinkelung (13) die dem Kanal (3) zugewandten Seite des Gehäuseinnenraumes (2) durchdringt und mit seinem anderen Ende im Schaltergehäuse (1) schwenkbar gelagert ist,
**dadurch gekennzeichnet, daß**
der Betätigungsbügel (7) aus einem rechteckigen Blechstreifen mit einem an seinem einen Ende angeformten halbkreisförmigen Bereich (9) und an seinen gegenüberliegenden Ende angeformten Abwinkelung (13) besteht.

2. Staub- und wassergeschützter Schalter nach Anspruch 1,
**dadurch gekennzeichnet, daß**
die Abwinkelung (13) am unteren Ende einen bogenförmigen Endbereich (14) aufweist.

3. Staub- und wassergeschütztes Schaltelement nach Anspruch 1 und 2,
**dadurch gekennzeichnet, daß**
der halbkreisförmige Bereich (9) in einer Aussparung (8) im Schaltergehäuse (1) schwenkbar gelagert ist.

4. Staub- und wassergeschützter Schalter nach Anspruch 3, **dadurch gekennzeichnet, daß**
die Aussparung (8) für die Schwenklagerung des Betätigungsbügels (7) räumlich getrennt vom Gehäuseinnenraum (2) angeordnet ist.

5. Staub- und wassergeschützter Schalter nach Anspruch 1 und mindestens einem der vorangehenden Ansprüche,
**dadurch gekennzeichnet, daß**
der Betätigungsbügel (7) im Bereich der Abwinkelung (13) mit einer Membran aus einem biegeweichen Kunststoffmaterial versehen ist.

## Claims

1. Switch protected against water and dust, in particular for a belt buckle of restraint systems in automobiles, for the indication whether the belt tongue is inserted and properly latched into the buckle, with two contact plates (5, 6), the contact making areas of which are arranged in a housing interior (2) of the switch housing (1), protected against foreign matter, and for which the contact is switchable by moving a slide (4) in a channel (3) arranged to the side of the housing interior (2), for which the contact plates, consisting of a fixed contact plate (5) and a contact spring plate (6), are switchable by means of an actuating bracket (7), and the actuating bracket (7) protrudes, with its angulation (13), through the side of the housing interior (2) facing the channel (3), and is swivel-mounted with its other end in the switch housing (1),
**characterised in that**
the actuating bracket (7) consists of a rectangular plate strip with an integrally formed semicircular area (9) at one of its ends, and an angulation (13) integrally formed at the opposite end.

2. Switch protected against water and dust, according to claim 1,
**characterised in that**
the angulation (13) shows an arc-shaped final area (14) at the bottom end.

3. Switching element protected against water and dust, according to claim 1 and 2,
**characterised in that**
the semicircular area (9) is swivel-mounted in a recess (8) in the switch housing (1).

4. Switch protected against water and dust, according to claim 3,
**characterised in that**
the recess (8) for the swivel-mounting of the actuating bracket (7) is arranged spaced apart from the housing interior (2).

5. Switch protected against water and dust, according to claim 1 and
at least one of the previous claims,
**characterised in that**
the actuating bracket (7) is equipped with a membrane made of a pliable plastic material in the area of the angulation (13).

## Revendications

1. L'interrupteur protégé contre la poussière et l'eau, en particulier pour une boucle de ceinture des dispositifs de retenue des automobiles, en dénonçant que la languette de ceinture est correctement insérée et verrouillée dans la boucle de ceinture, avec deux tôles de contact (5,6), dont les zones de mise en contact sont agencées à l'intérieur d'un boîtier (2) protégé contre les matières étrangères du boîtier d'interrupteur (1) et le contact se déclenche au mouvement d'un coulisseau (4) dans un canal latéral (3) de l'intérieur du boîtier (2), où les tôles de contact, consistant en une tôle de contact fixe (5) et une tôle de ressort de contact (6), sont commutables au moyen d'un étrier d'actionnement (7), et l'étrier d'actionnement (7) avec son coude (13) traverse le côté de l'intérieur du boîtier (2) orienté vers le canal (3) et est logé de manière pivotante dans le boîtier d'interrupteur (1) avec son autre extrémité,
**caractérisé en ce que**
L'étrier d'actionnement (7) est constitué d'une bande de tôle rectangulaire avec une zone semi-circulaire (9) à l'une de ses extrémités et d'un coude (13) formé à son extrémité opposée.

2. L'interrupteur protégé contre la poussière et l'eau selon la revendication 1,
**caractérisé en ce que**
le coude (13) présente une portion terminale incurvée (14) sur son extrémité inférieure.

3. L'élément de commutation protégé contre la poussière et l'eau selon les revendications 1 et 2,
**caractérisé en ce que**
la zone semi-circulaire (9) est logée de manière pivotante dans un creux (8) du boîtier de commutation (1).

4. L'interrupteur protégé contre la poussière et l'eau selon la revendication 3,
**caractérisé en ce que**
le creux (8) est disposé séparément de l'intérieur du boîtier (2) pour le logement pivotant de l'étrier d'activation (7).

5. L'interrupteur protégé contre la poussière et l'eau selon la revendication 1 et au moins une des revendications ci-dessus,
**caractérisé en ce que**
l'étrier d'activation (7) est muni d'une membrane en un matériau plastique souple dans la zone du coude (13).
